# EUROPEAN PATENT APPLICATION

(11) **EP 3 846 066 A1**
(43) Date of publication of application: **07.07.2021**
(21) Application number: 20150357.0
(22) Date of filing: 06.01.2020
(51) Int. Cl.: G06F 30/20, G06F 119/06, G06F 119/14

(54) **ESTIMATING DESIGN LOADS FOR WIND TURBINES**

(71) Applicant: VESTAS WIND SYSTEMS A/S, 8200 Aarhus N (DK)
(72) Inventor: YVES DEBRUYNE, Yannick, 4200-248 Porto (PT); BRØDSGAARD, Martin, 8382 Hinnerup (DK); SØRENSEN, Søren Hove, 8382 Hinnerup (DK); SEAWARD, James, 8200 Aarhus N (DK)
(74) Representative: Vestas Patents Department

(57) **Abstract**

Aspects of the present invention relate to a method of estimating design loads of different wind turbine configurations. The method comprises calculating a plurality of preliminary load sets for each of a plurality of wind turbine configurations, each load set including a preliminary load value for each load metric; extracting, for each load metric, a driving load from the calculated preliminary load values; identifying, for each load metric, the wind turbine configurations for which the associated preliminary load value is within a predetermined threshold of the extracted driving load; determining a subset of the wind turbine configurations, comprising at least one of the identified wind turbine configurations for each load metric; and using the subset to estimate design loads of different wind turbine configurations.

## Description

### TECHNICAL FIELD

The present disclosure relates to the estimation of design loads for wind turbines, particularly the use of methods and computer-implemented methods for estimating the design loads of different wind turbine configurations.

### BACKGROUND

When designing new models of wind turbine, it is important to design all possible configurations of the wind turbine to be able to withstand the highest loads that the wind turbine is expected to face during its working lifetime. Performing simulations and modelling of wind turbine configurations has become an important aspect of this design process, and the results of the modelling informs the design of key components.

However, estimating design loads is not straightforward; current practice is to simulate every possible wind turbine configuration under every possible load case, and to base the estimation on all of these simulations. As the number of possible wind turbine configurations and the number of load cases increases, the amount of computing power required to both perform the simulations and analyse the data output from each of the simulations also increases. As the conditions in which renewable power is used becomes more diverse and the need for product variation increases, the requirement for even more computing power will increase further, as will the desire for quicker, more frequent computation of design loads.

Unfortunately, rapidly expanding the computing power available to wind turbine manufacturers to permit these ever more complex and frequency computations to be performed is expensive, inconvenient, and unsustainable.

It is against this background that the present invention has been developed.

### SUMMARY OF THE INVENTION

According to an aspect of the present invention there is provided a method of estimating design loads of different wind turbine configurations. The method comprises calculating a plurality of preliminary load sets for each of a plurality of wind turbine configurations, each load set corresponding to a different load case, and each load set including a preliminary load value for each of a plurality of load metrics. The method further comprises extracting, for each of the plurality of load metrics, a driving load from the calculated preliminary load values. The method further comprises identifying, for each of the plurality of load metrics, each of the plurality of wind turbine configurations for which the associated preliminary load value is within a predetermined threshold of the extracted driving load. The method further comprises determining a subset of the plurality of wind turbine configurations, the subset comprising at least one of the identified wind turbine configurations for each of the plurality of load metrics. The method further comprises using the determined subset of wind turbine configurations to estimate design loads of different wind turbine configurations.

The above method provides several benefits when estimating design loads for wind turbine configurations.

By using only a subset of the available wind turbine configurations to estimate the design loads, the computational power required to both model and analyse the models of the wind turbine configurations to estimate design loads is reduced compared to the conventional approach of using all the wind turbine configurations to estimate design loads.

Furthermore, by extracting a driving load for each metric and using this driving load in the determination of the subset, it is ensured that the subset that is eventually used to determine design loads is representative of the most extreme load that the configurations as a group will experience. The identification of configurations whose preliminary load values are within a threshold value of the driving load. Accordingly, the extraction of the driving load guarantees that the subset allows for the estimation of the design loads.

The use of a threshold to identify appropriate configurations in relation to the driving load permits variation in the tolerance of which configurations are used in the subset. Setting the threshold as close as possible to the driving load leads to fewer configurations identified as having preliminary load values within the threshold. Accordingly, as the preliminary load values of the identified configurations are closer to the driving load, the determination of design loads will be more accurate. On the other hand, as fewer configurations are identified and those configurations may have fewer preliminary load values within the threshold for all metrics, more configurations may be required in the subset. Conversely, a threshold relatively far from the driving load leads to more identified configurations, and so may permit fewer configurations to be used in the subset because more configurations have multiple preliminary load values within the threshold. Therefore, the threshold permits a reduction in the necessary computational power in some circumstances, a highly accurate determination of design loads in other circumstances, and a compromise between the two in others.

The number of identified wind turbine configurations in the subset may be less than or equal to an upper threshold number of wind turbine configurations. Setting an upper threshold number of wind turbine configurations in the subset ensures that the number of configurations that are used to estimate design loads is kept below the threshold, thereby leading to a lower computational power usage.

Determining the subset may comprise determining the upper threshold number of identified wind turbine configurations; determining all combinations of between one and the upper threshold number of identified wind turbine configurations having at least one of the identified wind turbine configurations for each of the plurality of load metrics; and selecting one of the determined combinations to form the subset.

The upper threshold number may be a minimum number of wind turbine configurations for which there is at least one identified wind turbine configurations for each of the plurality of load metrics. Selecting a minimum number of configurations and limiting the subset to the minimum number further reduces the computational power used in estimating design loads.

Determining the minimum number of wind turbine configurations may comprise solving a linear optimisation problem involving the identified wind turbine configurations.

Determining the subset may comprise determining a plurality of combinations of the identified wind turbine configurations, each combination having at least one of the identified wind turbine configurations for each of the plurality of load metrics; generating, for at least two of the plurality of combinations, a combined load set comprising, for each load metric, the preliminary load value associated with one of the identified wind configurations for the load metric; and selecting, as the subset, one of the combinations based on a comparison between each combined load set and the set of driving loads.

Selecting, as the subset, one of the combinations based on a comparison between the combined load set and the set of driving loads may comprise determining, for each combined load set, the deviation of the preliminary load values of the combined load set from the respective driving loads; determining, for each combined load set, a maximum deviation metric based on the determined deviations; and selecting, as the subset, the combination corresponding to the smallest maximum deviation metric. The deviations may be determined based on a cost function. The selection of the combination having the smallest maximum deviation metric advantageously provides a subset whose load set is most similar to the driving load set, thereby leading to an accurate design load estimation.

Determining the upper threshold number may be performed prior to determining the plurality of combinations of the identified wind turbine configurations. In other words, both the determination of the upper threshold and the section of the combination of the smallest maximum deviation metric may be performed together, so that a combination of configurations is chosen as the subset that is a minimum possible number of combinations that has identified configurations for each metric and that is the least different from the driving loads. This results in an accurate solution for estimating design loads with an optimised usage of computational power.

The preliminary load values for each wind turbine configuration may be based on differences between the respective wind turbine configuration and a control wind turbine configuration. Alternatively, the preliminary load values for each wind turbine configuration may be based on preliminary simulations.

Extracting the driving load may comprise, for each of the plurality of load metrics, identifying the maximum preliminary load value from the calculated preliminary load values and defining the driving load based on the maximum preliminary load value. Using the determined subset of wind turbine configurations to estimate design loads of different design loads may comprise assigning, to each of the preliminary load values for the wind turbine configurations of the subset, a weighting representing the difference between the preliminary load value and the driving load for the relevant metric; modelling each of the wind turbine configurations of the subset to determine an output load for each load metric; and applying the weightings to the output loads to estimate design loads of different design loads.

The method may comprise designing one or more components for a wind turbine generator based on the estimated design loads. The method may comprise manufacturing one or more components for a wind turbine generator based on the estimated design loads.

According to an aspect of the invention, there is provided a computer program comprising instructions which, when the program is executed by a computer, cause the computer to carry out the steps of the method described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a plurality of wind turbine configurations;
Figure 2 shows a flow chart of a method for estimating design loads according to an embodiment of the invention;
Figure 3 shows a representation of a preliminary load set used in the method of Figure 2;
Figure 4 shows a subset of wind turbine configurations obtained using the method according to Figure 2;
Figure 5 shows a flow chart of a method for determination of the subset of Figure 4 according to an embodiment of the invention; and
Figures 6 and 7 show diagrammatic representations of steps of the method of Figure 5.

### DETAILED DESCRIPTION

Generally, the present disclosure relates to a method for estimating design loads by selecting a subset of a plurality of wind configurations to use in estimating the design loads. By selecting only a subset, the computational power and time expended in modelling wind turbine configurations and analysing those models to estimate design loads is reduced. The methods described herein detail how a careful selection of the wind turbine configurations of the subset ensures that the effort required to estimate design loads is reduced without significantly sacrificing the accuracy of the estimations. Accordingly, more configurations can be considered for more load cases without unnecessary loading of computer systems.

When designing wind turbine components for manufacture, design loads are an important consideration. The term 'design loads' means a set of load values that the component or system should be designed to withstand. The design loads can therefore be thought of as the maximum loads that the component or system is expected to experience in use during its lifetime. For example, in the field of wind turbines, the design loads may include a value for a maximum bending moment that a wind turbine blade is expected to experience under wind loading.

In modern turbine schemes, where modularity is increasingly important, many different combinations of wind turbine components may be provided to give different wind turbine configurations or 'variants'. These configurations may also differ based on the climate in which they are to be used and/or on the methods of operation of wind turbine configurations. Both these parameters materially affect how the resultant wind turbine reacts under load. Examples of climates are climactic conditions such as air density, turbulence intensity, average wind speed; maximum wind speed; wind direction relative to the turbine; air temperature; and any other parameter that may affect the operation of the turbine.

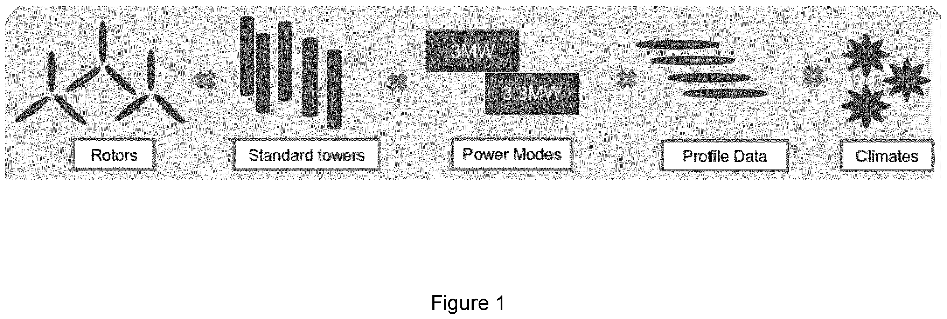

As illustrated schematically in the exemplary Figure 1, the configurations may be combinations of different rotors, towers, power modes, profile data, and climate types. The rotors and towers may differ from one another in material used, method of construction, dimensions, or other characterizing properties. In some embodiments, the combinations may be of more specific characteristics such as blade types and nacelle types.

In Figure 1, there are shown three of each of these five different characteristics, so 270 different combinations of these fifteen options are possible. These combinations are modelled for different load cases. Load cases comprise events and scenarios experienced by turbines in their operative lifetime that may result in high loads incident upon them. By high loads, it is meant higher loads than during normal operation. For example, a load case may comprise a climatic event, such as a gust, i.e. a short increase in wind speed. A load case may also comprise a turbine fault or interruption in its normal operating activities. In some load cases, climatic events and turbine faults may be combined, so that an example load case would be a gust during a turbine fault. Many other load cases are possible, due to different climates and conditions, as well as different changes to the operation of the turbine.

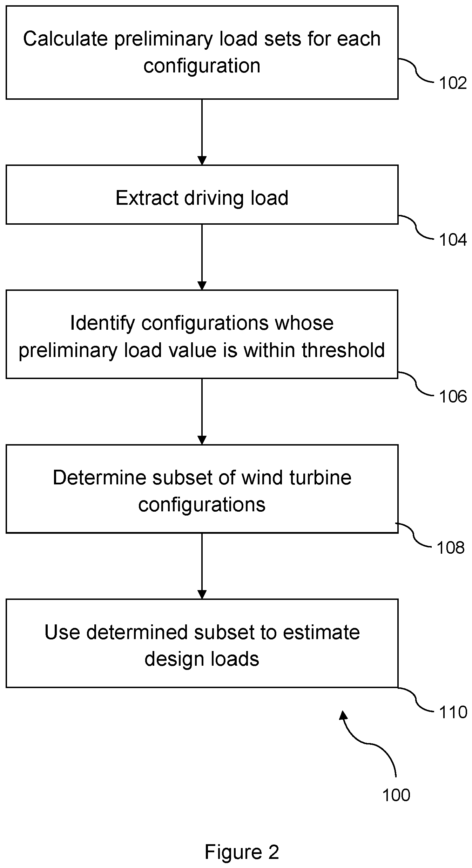

Modelling each of these 270 different combinations for many different load cases is computationally inefficient. Therefore, in order to select only a subset of these possible combinations, the method of Figure 2 is implemented. In practice, the number of different combinations is likely to be hundreds or even thousands. Combining each of these combinations with several thousand possible load cases or sets may result hundreds of thousands or even millions simulations.

The method of Figure 2 is a method for estimating design loads for different wind turbine configurations, which, in this case, are the 270 possible wind turbine configurations of Figure 1.

At step 102 of Figure 2, for each configuration, a preliminary load set is calculated. The preliminary load set is an array of preliminary load values for the configuration. Each preliminary load value corresponds to one of a plurality of load metrics. The load metrics are measurements or other indicative values associated with operation of the wind turbine. In some embodiments, the load values correspond to sensor metrics that are typically obtained from the wind turbine, so that each preliminary load value is an expected output of a sensor of the wind turbine.

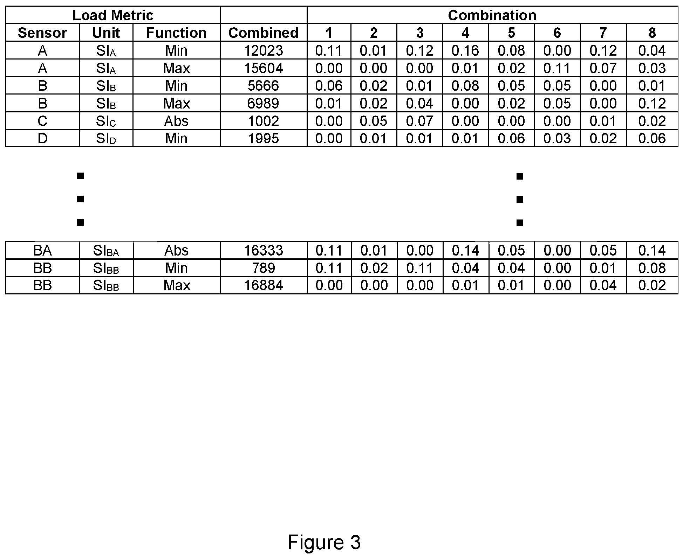

An example of the load metrics can be seen in Figure 3. Figure 3 is a representation of a table created using the method of Figure 2. In Figure 3, a plurality of sensors are provided in the first column. The units of measurement of these sensors are provided in the second column, while a particular function of the sensor is stipulated in the third column. The function may be any suitable function. The functions may represent extreme loads experienced at that sensor, i.e. the maxima and minima (usually provided as a pair) or the absolute value. The functions may represent fatigue loads, for example in the form of a rainflow count, load spectra, or long-range dependence. The functions may also be proxies for other components such as the gearbox. Proxies are means for comparing measurements from particular sensors with complex data sets.

In the embodiment of Figure 3, for each row the load metric is considered to be the combination of these first three columns. So, for example, in one row of the table, the sensor may be a fore-aft accelerometer mounted at the top of the turbine tower. The units of the accelerometer will be m/s². So, if the function is the maximum value, the load metric for that row is the maximum value output by a fore-aft accelerometer in m/s², and, for each configuration, in step 102 a preliminary load value for this load metric is provided.

The preliminary load values may be determined in one of several ways. In some embodiments, the preliminary load values of each load set are obtained based on modelling or simulations of the configuration in one or more load cases. The modelling is less data-intensive than the eventual full simulations performed to estimate design loads so that the preliminary load values provided are an approximation to the loads. For example, the modelling may use finite-element analysis, and in step 102, fewer elements may be used, resulting in a coarse mesh compared to the fine mesh that may be used for the eventual estimation of the design loads. As these values are being used for comparison at this stage and thresholding is utilised later to filter out particular results, the preliminary load values may be determined to a lower accuracy.

It is envisaged that each of the configurations will be modelled for a plurality of load cases and the preliminary load value for each configuration will be selected from the results of the models. In the above example where the maximum of the accelerometer readings is the metric, the preliminary load value for a configuration will be the maximum value of the maximums for each of the models. This may be called the 'driving' value as it is the most relevant value to the design load. In some embodiments, preliminary load values may be generated for each of the metrics for each of the configurations and load cases. In other embodiments, as already described, the preliminary load values are selected from a plurality of load cases for each configuration.

In other embodiments, instead of modelling of the wind turbine configurations, the preliminary load values may be based on relative differences between the configurations. As mentioned above, because these values are used for comparison, they do not need to be the exact values output by the sensor but only representative of them and suitable for comparison with one another. Therefore, the preliminary load values may be normalised, comparable load values. These may be based on predetermined load values obtained by modelling or based on a control wind turbine configuration so that changes made to the control have an assigned value or weighting that the change applies to each load metric.

In general, therefore, the step 102 of determining preliminary load values requires a low level of computational power compared to the high level of simulations that may otherwise be performed. The outcome is sets of preliminary load values, each having a respective value for a plurality of load metrics. These sets are comparable with one another. As shown in Figure 3, the result is an array of values, each column representing a preliminary load set for each configuration. A plurality of preliminary load values are provided for each load metric. As will be explained later, the values shown in Figure 3 for the preliminary load sets are not the absolute values but rather deviations from a preliminary design load, which is now discussed.

At the next step 104 of the method 100 of Figure 2, a preliminary design load, which may be referred to as a driving load, for each of the load metrics is extracted. The preliminary design load is an approximation to the design load for that sensor, and is used for identifying configurations for modelling to accurately estimate design loads later in the method 100.

In some embodiments, the driving load for each load metric determined by identifying the maximum of the preliminary load values for that metric and using the identified metric as the driving load. In other embodiments, the driving load for each metric may be based on the preliminary load values. In other embodiments, the driving load may be predetermined, for example using component information from manufacturers of the components. Effectively, the driving load is the 'worst' load experienced for the specific metric during any of the configuration and load case combinations. In general, the driving load will always be equal to or greater than the maximum preliminary load value for the metric.

The driving load value is depicted in the column labelled 'combined' in Figure 3.

The values the columns to the right of the 'combined' column, labelled 1 to 8 respectively, represent different configurations or configurations and load case combinations. For each metric, these columns contain values of the deviation of the preliminary load value for that metric and configuration from the combined value in the 'combined' column. A value of zero will mean that the preliminary load value is equal to the value in the combined column, whereas, for example, a value of 0.27 means that the preliminary load value is 27% lower than the combined value.

At step 106 of the method 100 of Figure 2, each of the preliminary load values for each metric is compared against the relevant driving load to identify each of the plurality of configurations for which the associated preliminary load value is within a predetermined threshold of the driving load. The threshold values may be particular to each load metric, or may be a single percentage value difference from the driving load. For example, the threshold value may be set so that configurations are identified that are within 1% of the driving value or within 5% of the driving value. This may involve the determination of a deviation as already illustrated in Figure 3 and the comparison of that deviation with a threshold deviation.

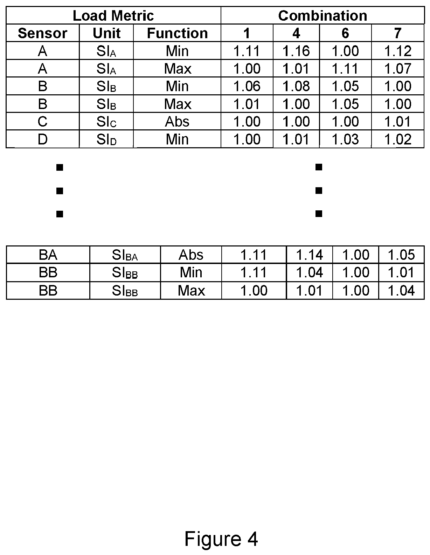

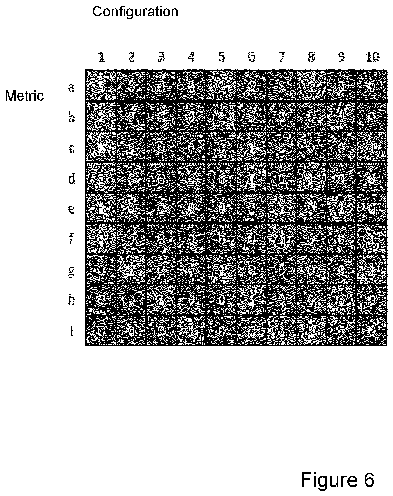

Accordingly, an array, such as that shown in Figure 4 is achieved. In some embodiments, the identification may result in an array in which the preliminary load values that are within the threshold are represented by a one, and values that are not within the threshold value are represented by a zero, as shown in Figure 6.

The value of the threshold may be varied to increase the number of configurations that are identified in step 106. Accordingly, while the deviation between the driving load and the preliminary load values of each identified configuration may be greater, the potential for further reducing the number of wind turbine configurations that are used to determine the design loads later in the method is improved. In general, therefore, the threshold value is chosen to improve the accuracy of the estimated design loads, or to reduce the computational power taken to estimate design loads, and a compromise exists between these two benefits.

In some embodiments, as will be discussed later, the deviation of the threshold value from the driving load may be high so that more wind turbine configurations are identified, and weightings may be subsequently determined to correct the eventual design loads based on the deviation of each preliminary load value from the driving load so that the accuracy of the eventual design load estimation is not impacted by the changing of the threshold value.

At step 108 of the method 100 of Figure 2, a subset of the plurality of wind turbine configurations is determined. The subset comprises at least one of the identified wind turbine configurations for each of the plurality of load metrics. In other words, the subset is a combination of one or more wind turbine configurations that, between them, have at least one value within the threshold of the driving load for each metric. The subset is also a combination of fewer wind turbine configurations than the total number of wind turbine configurations.

In the example illustrated in Figure 6, there are ten configurations, labelled 1 to 10, and nine metrics, labelled a to i, depicted. The subset may comprise any subset of the ten configurations.

For example, the subset may comprise the configurations 1 to 9 because, in this subset of configurations, there is provided at least one of the identified configurations having a preliminary load value within the threshold of the driving load, for each metric a to i. For metric a, configurations 1, 5, and 8 are the identified configurations. For metric g, the identified configurations are 2 and 5.

In another example using the array of Figure 6, the subset may comprise fewer configurations, such as a combination of configurations 1 to 4, which are identified configurations for each of metrics a to i as they together have one preliminary value within the threshold of the driving load for each metric (these values being labelled with a '1' in Figure 6).

At step 110, the subset determined in step 108 is used to estimate design loads. As indicated above, the estimation of the design loads is performed using simulations or modelling of the subset of configurations, thereby reducing the required computational power that would be ordinarily required when all configurations are modelled. The design loads are estimated for each of the load metrics used in the previous steps of the method 100. If compared with earlier modelling performed to establish the preliminary load values, the estimation of design loads in step 110 is a more complex and elaborate computation, requiring a high computing level. The design loads may comprise time traces and Markov matrices for loads of the turbine during its lifetime. The design loads may be calculated for a plurality of load metrics including those used in earlier steps as well as additional load metrics for which the preliminary load values were not determined.

Wind turbine components may be subsequently designed and/or manufactured based on the estimated design loads.

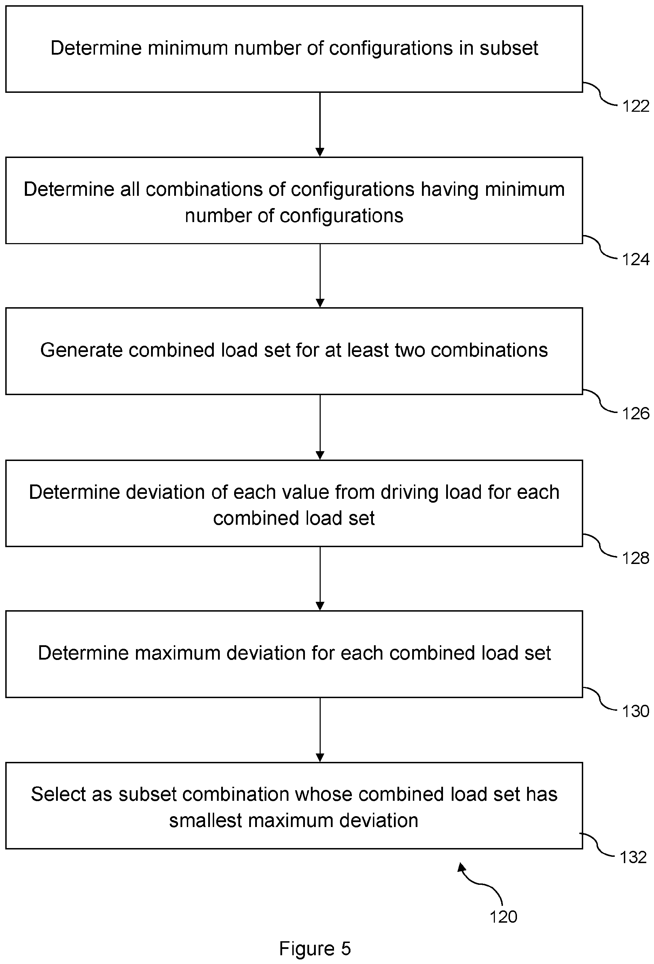

Focussing on the determination of the subset of wind turbine configurations at step 108, Figure 5 illustrates a method 120 by which the subset of configurations may be selected efficiently and to reduce the number of configurations for modelling while maintaining accuracy of the eventual estimated design loads.

In this method 120, at step 122, the minimum number of configurations for the subset is determined. The minimum number is the number of configurations in the smallest possible combination of configurations that provides at least one identified configuration for each metric. Using Figure 6 as an example once again, there is no single combination that has an identified wind turbine configuration for each metric, nor is there any combination of two configurations that provides an identified wind turbine configuration for each metric. However, there are several combinations of three wind turbine configurations that provide identified configurations for each metric, including the subset of configurations 5, 6, and 7 and the subset of configurations 8, 9, and 10.

To identify the minimum number of configurations, a linear problem is determined and solved using any suitable approach, as would be well understood by the skilled person.

Having determined the minimum number of configurations, at step 124, all combinations having the minimum number of configurations and that have at least one identified wind turbine configuration for each metric are identified. As already identified, in Figure 6 this would lead to two combinations: 5, 6, 7; and 8, 9, 10.

The determination of the minimum number of configurations in step 122 is performed using a linear problem solver, and the subsequent steps are also solved using a linear problem solver. The linear problem solver is designed to target at least some of the combinations having the minimum number of configurations. Where there is only one combination having the minimum number of configurations, the steps following step 124 are not performed. Where there is more than one, the steps 126 to 132 are performed for at least two of the combinations determined in step 124, the at least two of the combinations being selected by the linear problem solver to solve the linear problem of identifying which of the determined combinations has the smallest maximum deviation from a driving load.

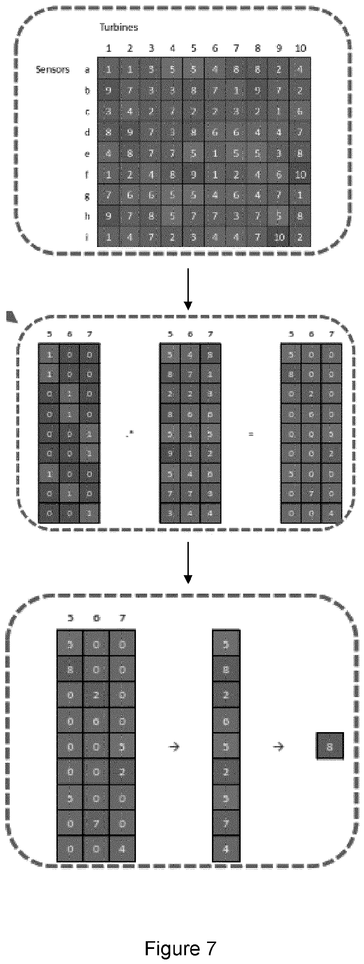

For at least two identified combinations, combined load sets are generated in step 126. By this, it is meant for each metric, the preliminary load value or a representative value for the identified wind turbine configuration for each metric is chosen and combined into a single load set. As there are only two combinations determined in step 124 for the example of Figure 7, combined load sets are generated for both combinations.

At step 128, a deviation of the values of the combined load sets from the values of the driving load are determined. In other words, for each metric, a comparison is made between the driving load and the load value for that metric in the combined set. In some embodiments, the deviations for all preliminary load values may be determined before the generation of combined load sets, so that the deviation is already known. For example, as shown in Figure 7, a cost function is applied to each of the preliminary values so that each preliminary load value becomes a representative costed value. The representative costed values are combined with the arrays of 1s and 0s identified in Figure 6 for the at least two combinations from step 126 to provide the combined load sets.

Based on the deviations, at step 130 a maximum deviation of the values of the combined load set for the selected combinations is identified. In Figure 7, the combined load set is depicted in the part labelled 'step 3', and of this combined load set, the maximum deviation is the value 8, as higher values in the cost function represent higher deviations from the driving load. This is performed for each combination. As shown in the part labelled 'step 1' of Figure 7, the other combination of configurations 8, 9, and 10 would yield a combined load set in which the deviation of configuration 10 at metric f is used, which has the value 10. This would be the maximum deviation for this combination.

After determining each maximum deviation for each combined load set, at step 132, the smallest value of the maximum deviations is identified as this combination yields the least difference from the driving load. Accordingly, comparing values of 8 and 10, 8 is the smallest maximum deviation, so the combination of configurations 5, 6, and 7 is selected as the subset.

The smallest maximum deviations are also determined using a series of iterative linear problems.

In essence, the determination of a subset as described in Figure 5 can be considered to be formed of two main steps: the determination of a minimum number of configurations; and the determination of the smallest maximum deviation that also meets the objective of having a minimum number of configurations. In some embodiments, one of these two main steps may be aimed for rather than both, i.e. the second step is not performed, and instead a minimum number of configurations is found and one combination having the minimum number is used to estimate design loads or a subset is chosen whose maximum deviation from the design load is smallest.

In some embodiments, rather than a minimum number, all combinations of having less than or equal to an upper threshold value of configurations may be determined in this step. The upper threshold number may be predetermined or determined otherwise.

In other embodiments of Figure 6, combined load sets may be generated for all combinations, and the subsequent steps performed for each determined combination.

It is noted above that the threshold value used for identifying wind turbine configurations may be decreased to identify more wind turbine configurations and weightings used to ensure that accuracy does not significantly decrease. These weightings or factors may be assigned to each preliminary load value based on its deviation or difference from the driving load value for that metric. Subsequently, when the subset of configurations is used to estimate design loads, the design load for each load metric is corrected by the weighting determined for the preliminary load value used in the determination of the subset. Accordingly, the output design loads from the modelling are corrected.

The weightings may be, or may be based on, the deviations determined at step 128 for the subset. The magnitude of the deviation is applied retrospectively to the calculated design loads to account for the loosening of the threshold. For the configurations of the subset, weightings may be calculated based specifically for each load case based on original estimations for each sensor, or may be calculated otherwise.

It will be appreciated that various changes and modifications can be made to the present invention without departing from the scope of the present application.

## Claims

1. A method of estimating design loads of different wind turbine configurations, the method comprising:
calculating a plurality of preliminary load sets for each of a plurality of wind turbine configurations, each load set corresponding to a different load case, and each load set including a preliminary load value for each of a plurality of load metrics;
extracting, for each of the plurality of load metrics, a driving load from the calculated preliminary load values;
identifying, for each of the plurality of load metrics, each of the plurality of wind turbine configurations for which the associated preliminary load value is within a predetermined threshold of the extracted driving load;
determining a subset of the plurality of wind turbine configurations, the subset comprising at least one of the identified wind turbine configurations for each of the plurality of load metrics, and using the determined subset of wind turbine configurations to estimate design loads of different wind turbine configurations.

2. The method of claim 1, wherein the number of identified wind turbine configurations in the subset is less than or equal to an upper threshold number of wind turbine configurations.

3. The method of claim 2, wherein determining the subset comprises:
determining the upper threshold number of identified wind turbine configurations; and,
determining all combinations of between one and the upper threshold number of identified wind turbine configurations having at least one of the identified wind turbine configurations for each of the plurality of load metrics.

4. The method of claim 3, wherein determining the subset comprises selecting one of the determined combinations to form the subset.

5. The method of claim 3 or claim 4, wherein the upper threshold number is a minimum number of wind turbine configurations for which there is at least one identified wind turbine configurations for each of the plurality of load metrics.

6. The method of claim 5, wherein determining the minimum number of wind turbine configurations comprises solving a linear optimisation problem involving the identified wind turbine configurations.

7. The method of any preceding claim, wherein determining the subset comprises:
determining a plurality of combinations of the identified wind turbine configurations, each combination having at least one of the identified wind turbine configurations for each of the plurality of load metrics;
generating, for at least two of the plurality of combinations, a combined load set comprising, for each load metric, the preliminary load value associated with one of the identified wind configurations for the load metric; and
selecting, as the subset, one of the combinations based on a comparison between each combined load set and the set of driving loads.

8. The method of claim 7, wherein selecting, as the subset, one of the combinations based on a comparison between the combined load set and the set of driving loads comprises:
determining, for each combined load set, the deviation of the preliminary load values of the combined load set from the respective driving loads;
determining, for each combined load set, a maximum deviation metric based on the determined deviations; and
selecting, as the subset, the combination corresponding to the smallest maximum deviation metric.

9. The method of claim 8, wherein the deviations are determined based on a cost function.

10. The method of any one of claims 7 to 9, when depending through claim 3, wherein determining the upper threshold number is performed prior to determining the plurality of combinations of the identified wind turbine configurations.

11. The method of any one of the preceding claims, wherein the preliminary load values for each wind turbine configuration are based on differences between the respective wind turbine configuration and a control wind turbine configuration or on preliminary simulations.

12. The method of any one of the preceding claims, wherein extracting the driving load comprises, for each of the plurality of load metrics, identifying the maximum preliminary load value from the calculated preliminary load values and defining the driving load based on the maximum preliminary load value.

13. The method of any one of the preceding claims, wherein using the determined subset of wind turbine configurations to estimate design loads of different design loads comprises:
assigning, to each of the preliminary load values for the wind turbine configurations of the subset, a weighting representing the difference between the preliminary load value and the driving load for the relevant metric;
modelling each of the wind turbine configurations of the subset to determine an output load for each load metric; and
applying the weightings to the output loads to estimate design loads of different design loads.

14. The method of any one of the preceding claims further comprising designing and/or manufacturing one or more components for a wind turbine generator based on the estimated design loads.

15. A computer program comprising instructions which, when the program is executed by a computer, cause the computer to carry out the steps of the method of any one of the preceding claims.
